# EUROPEAN PATENT APPLICATION

(11) **EP 3 621 297 A1**
(43) Date of publication of application: **11.03.2020**
(21) Application number: 18193431.6
(22) Date of filing: 10.09.2018
(51) Int. Cl.: H04N 5/765, G11B 27/031, G07C 5/08

(54) **SYSTEM AND METHOD FOR HANDLING A USER'S EXPERIENCE OF A VEHICLE**

(71) Applicant: Volvo Car Corporation, 405 31 Göteborg (SE)
(72) Inventor: Lindgren, Thomas, 310 58 Vessigebro (SE)
(74) Representative: Valea AB

(57) **Abstract**

The embodiments herein relate to a method performed by a vehicle system (400) for handling a user's (105) experience of using a vehicle (100). The vehicle system obtains a request for recording information associated with the user's (105) experience when using the vehicle (100), and records the information by means of at least one of an audio recorder, an image recorder and a data recorder, as requested. The vehicle system determines from which at least one of the audio recorder, image recorder and the data recorder the recorded information should be provided to at least one other system, and provides the information from the determined recorder to the at least one other system.

## Description

### TECHNICAL FIELD

Embodiments herein relate generally to a vehicle system, a method performed by the vehicle system and a vehicle comprising the vehicle system. More particularly the embodiments herein relate to handling a user's experience of using a vehicle.

### BACKGROUND

When using a vehicle, the user may experience problems with the vehicle, he may have difficulties in understanding how various features of the vehicle should be used and he may have difficulties in understanding why the vehicle behaves in certain ways during use. The problems may be for example technical or user interface related problems. For example, with the introduction of driver assistance, features that can behave strange to the user in a specific situation are difficult to feedback to the vehicle manufacturer for identification and handling. The user might also have new ideas related to vehicle development and improvement, and wants to communicate this to the vehicle manufacturer for next software release or vehicle update. The user may also have a need to instantly and easily share his own driving experience with friends, family members and other vehicle users while driving safely without directly using handheld devices, like smartphones.

After having experienced a problem during use of a vehicle, the user may have problems to remember, recall and explain the problem when contacting the vehicle manufacturer's customer support in order to fix the problem or to get more information about the problem.

Therefore, there is a need to at least mitigate or solve this issue.

### SUMMARY

An objective of embodiments herein is therefore to obviate at least one of the above disadvantages and to provide improved handling of a user's experience of a vehicle.

According to a first aspect, the object is achieved by a method performed by a vehicle system for handling a user's experience of using a vehicle. The vehicle system obtains a request for recording information associated with the user's experience when using the vehicle. The vehicle system records the information by means of at least one of an audio recorder, an image recorder and a data recorder, as requested. The vehicle system determines from which at least one of the audio recorder, image recorder and the data recorder the recorded information should be provided to at least one other system. The vehicle system provides the information from the determined recorder to the at least one other system.

According to a second aspect, the object is achieved by a vehicle system for handling a user's experience of using a vehicle. The vehicle system is adapted to obtain a request for recording information associated with the user's experience when using the vehicle. The vehicle system is further adapted to record the information by means of at least one of an audio recorder, an image recorder and a data recorder, as requested. The vehicle system is adapted to determine from which at least one of the audio recorder, image recorder and the data recorder the recorded information should be provided to at least one other system. The vehicle system is adapted to provide the information from the determined recorder to the at least one other system.

According to a third aspect, the object is achieved by a vehicle comprising the vehicle system.

Since information from the user's experience is recorded by means of an audio recorder, an image recorder and a data recorder, information associated with the user's experience is instantly provided to another system such as e.g. the vehicle customer support system, a user device or a social media system. In this way, the user's experience can be used to further develop vehicles, to educate other vehicle users etc.

Embodiments herein afford many advantages, of which a non-exhaustive list of examples follows:
One advantage of the embodiments herein is that flexible, dynamic and fast feedback can be provided from the user to e.g. the vehicle manufacturer's customer support. With this, the user can participate and improve the product development of the vehicle.

Another advantage of the embodiments herein is that they provide a flexible choice of which information to be provided to the other system.

A further advantage of the embodiments herein is that they can be used as a safe way for the user to share his instant driving experience in rich media forms, by using the vehicle's sensors and data, to persons in their social network.

The embodiments herein are not limited to the features and advantages mentioned above. A person skilled in the art will recognize additional features and advantages upon reading the following detailed description.

### BRIEF DESCRIPTION OF THE DRAWINGS

The embodiments herein will now be further described in more detail by way of example only in the following detailed description by reference to the appended drawings illustrating the embodiments and in which:
- Fig. 1: is a schematic drawing illustrating a vehicle.
- Fig. 2: is a flow chart illustrating an example of a method.
- Fig. 3: is a flow chart illustrating an example of a method.
- Fig. 4: is a flow chart illustrating an example of a vehicle system.

The drawings are not necessarily to scale and the dimensions of certain features may have been exaggerated for the sake of clarity. Emphasis is instead placed upon illustrating the principle of the embodiments herein.

### DETAILED DESCRIPTION

The embodiments herein relate to that a user of a vehicle experiences technical or user interface problems while using the vehicle, e.g. during driving, and wants help to solve the problem, to understand the function or to get an idea on how to improve the function and wants to contribute to product development.

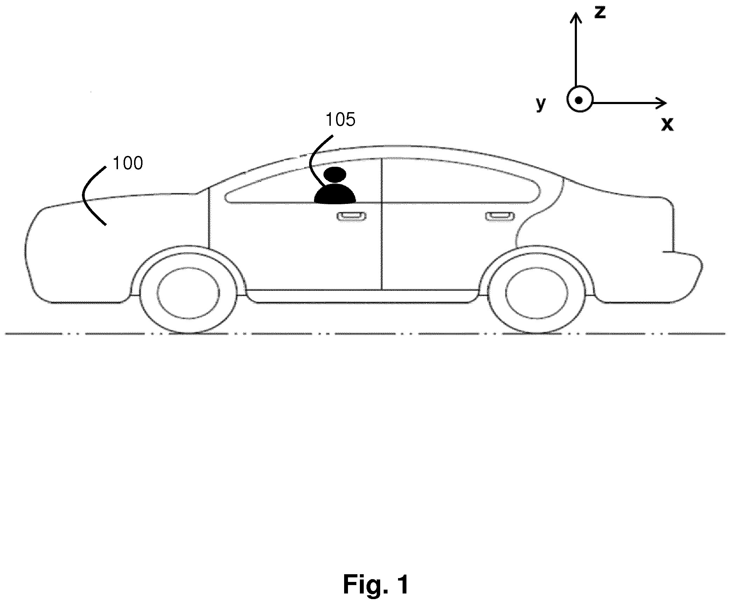

**Fig. 1** depicts a **vehicle 100** which is adapted to be used by at least one **user 105.** The vehicle 100 may be any arbitrary vehicle, for instance a car, truck, lorry, van, bus, motorcycle etc. The vehicle 100 may be at least partly autonomous or self-driven, it may be completely autonomous or self-driven, or it may be non-autonomous etc. The user 105 of the vehicle 100 may be referred to as a vehicle operator, a passenger, a vehicle occupant, a driver etc.

Directions as used herein, e.g. horizontal, vertical, lateral, relate to when the vehicle 100 stands on flat ground. A coordinate system is illustrated in fig. 1 which shows that the x-axis represents the direction backwards in the vehicle 100, the z-axis represents the upwards direction and the y-axis represents the left direction seen from the front of the vehicle 100.

The vehicle 100 comprises one or more recording devices (not shown in fig. 1) adapted to record information associated with the vehicle 100. One example of a recording device may be an audio recorder which is adapted to record audio information associated with the vehicle 100, e.g. sounds produced by the vehicle 100, user speech, etc. An audio recorder may be in the form of one or more microphones. Another example of a recording device may be an imaging recorder, e.g. a camera, adapted to record image information associated with the vehicle 100 such as images of the user 105, images of a display in the vehicle 100, or the environmental surroundings of the vehicle 100 etc. A further example of a recording device may be a data recorder adapted to record data associated with the vehicle 100, e.g. data produced by systems in the vehicle 100, data produced by the user 105 etc. When there are two or more recording devices comprised in the vehicle 100, they may be of the same or different types. Some example of combinations of recording device types are provided in Table 1 below:

**Table 1**

| **Recording device type 1** | **Recording device type 2** | **Recording device type 3** |
|---|---|---|
| Audio recorder | - | - |
| Audio recorder | Image recorder | - |
| Audio recorder | - | Data recorder |
| - | Image recorder | - |
| - | Image recorder | Data recorder |
| - | - | Data recorder |
| Audio recorder | Image recorder | Data recorder |

Note that the vehicle 100 may comprise other recording device types instead of or in addition to the ones exemplified above.

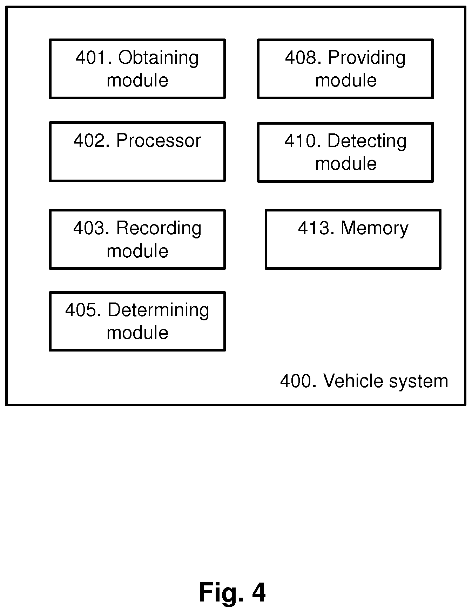

The vehicle 100 comprises a vehicle system 400 (not illustrated in fig. 1, but see fig. 4 for reference number 400) adapted to handle the user's 105 experience of using a vehicle 100.

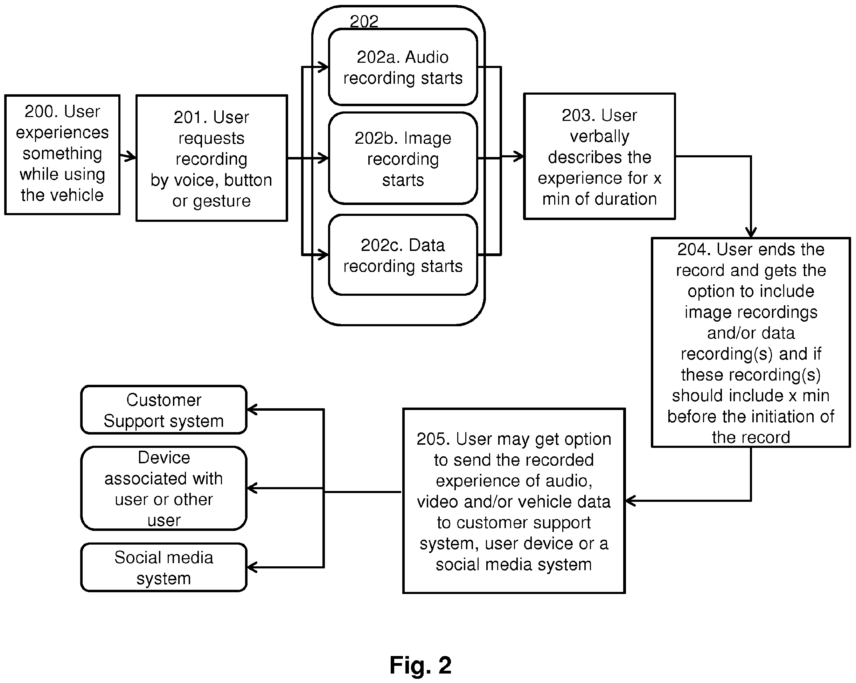

One example of a method performed by a vehicle system 400 for handling a user's 105 experience of using a vehicle 100 according to some embodiments will now be described with reference to the flowchart depicted in **fig. 2****.** In the example in fig. 2, the user 105 describes his experience using speech. Consequently, at least an audio sensor records information. The method comprises at least one of the following steps, which steps may as well be carried out in another suitable order than described below:

### Step 200

The user 105, e.g. the driver or a passenger, experiences something while using the vehicle 100 and wants assistance, to share information about the experience and to understand more about the experience. The use of the vehicle 100 may be for example driving, turning the engine on etc. The experience may be for example an unusual or unknown experience of the audio system, an uncomfortable experience related to the automatic driving function of the vehicle 100, an unusual experience related to the temperature system in the vehicle 100, or an unusual surrounding environmental driving experience related to traffic or scenery etc.

### Step 201

The user 105 requests recording by at least one of voice, button, gesture. The user 105 may request recording in general, or he may request a certain type of recording such as audio, video and/or data. Instead of the user 105 requesting a certain type of recording, the vehicle system 400 may determine the recording type without receiving any input from the user 105 about this.

### Step 202

The recording is started, as requested. At least one of the available recorders starts to record. Some examples of different recordings are described in steps 202a, 202b and 202c below, which may be seen as substeps of step 202. Depending on the requested recording type or by default, one, two or all of the substeps may be performed. Thus, steps 202a, 202b and 202c described below are substeps of step 202. One or more of the substeps 202a, 202b and 202c may be performed and in any suitable order. Table 2 below illustrates some examples of the order of the substeps and which of them that may be performed. The "-" in the table represents that the step does not exist:

**Table 2**

| **First step** | **Second step** | **Third step** |
|---|---|---|
| 202a | 202b | 202c |
| 202a | 202c | 202b |
| 202b | 202a | 202c |
| 202b | 202c | 202a |
| 202c | 202a | 202b |
| 202c | 202b | 202a |
| 202a | 202b | - |
| 202a | 202c | - |
| 202b | 202a | - |
| 202b | 202c | - |
| 202c | 202a | - |
| 202c | 202b | - |
| 202a | - | - |
| 202b | - | - |
| 202c | - | - |

The user 105 may determine which of the steps that should be performed by selecting the desired recording device. For example, all available recording devices may be visible in a list shown on a vehicle display, and the user 105 may select and activate the desired recording device in the menu, by using a voice command, a touch command etc. The vehicle system 400 may determine which of the steps that should be performed, e.g. based on which recording device that is available and functioning, which recording device that has the highest priority etc. For example, all recording devices may be selected as default.

### Step 202a

This is a substep of step 202. An audio recorder may start recording. It may be one, two or more audio recorders in the vehicle 100 that are started. It may be one, some or all audio recorders available in the vehicle 100 that is started. The number of recorders may be determined by the user 105 or it may be determined by the vehicle system 400.

For example, one or more microphones in the vehicle 100 are turned on and records audio in the vehicle 100, e.g. the user's speech when explaining his experience, sounds within the vehicle 100 etc. The recorded audio may be described as qualitative information associated with the user's experience. Qualitative information may be described as data that is not in the form of numbers. Qualitative information may be used for exploring, it may help in gaining an understanding of underlying reasons, opinions, and motivations. It provides insights into the problem or helps to develop ideas or hypotheses for potential quantitative research.

### Step 202b

This is a substep of step 202. An image recorder may start recording. It may be one, two or more image recorders that are started. It may be one, some or all image recorders available at the vehicle 100 that is started. The number of recorders may be determined by the user 105 or it may be determined by the vehicle system 400. The image recorder may be for example a camera. The image recorder may be adapted to obtain still or moving images, i.e. a still picture and/or a movie.

For example, one or more cameras in the vehicle 100 is turned on and records images in the vehicle 100, e.g. images of the user 105, images of displays in the vehicle 100 etc. The image may be a static image, it may be a video, it may be a two or three dimensional image etc. The recorded images may be qualitative information associated with the user's experience.

### Step 202c

This is a substep of step 202. A data recorder may start recording. It may be one, two or more data recorders that are started. It may be one, some or all data recorders available at the vehicle 100 that is started. The number of data recorders may be determined by the user 105 or it may be determined by the vehicle system 400.

The recorded data may be referred to as vehicle data and may be for example radar data, position data, data from a vehicle device such as e.g. the engine, temperature data, oil level data etc. The data recorded by the data recorder may be seen as quantitative data associated with the vehicle 100. Quantitative information may be described as numerical data. Quantitative data may be used to quantify a problem by way of generating numerical data that can be transformed into useable statistics. It may be used to quantify attitudes, opinions, behaviors, and other defined variables, and generalize results from a larger sample population. Quantitative research uses measurable data to formulate facts and uncover patterns.

### Step 203

When at least one of the recorders have started recording, for example the audio recorder, the user 105 can describe his vehicle experience. In this example, the user 105 describes his experience verbally. The verbal description may last for x minutes and/or seconds, where x is a positive integer. At least one of the image recorder and the data recorder may also record information, in addition to the audio recorder.

### Step 204

The user 105 ends the recording and may get the option to include information from the image recorder and/or the data recorder, in addition to the audio recorder. With this, both qualitative and quantitative information related to the user's experience may be recorded.

The user 105 may also get the option to determine if this information x minutes and/or seconds before the request of the recording should be included. x is a positive integer. Thus, the recording devices may record information even before the initiation is started in step 202. Information from the recording taking place before step 202 may be stored for example in a buffer memory or short term memory where the information is stored for a period of time which is shorter than the information stored after initiating in step 202. One difference between the information stored before and after the initiating in step 202 may be the amount of time it is stored. Thus, it may be possible to recall information up to x min and/or seconds before the initiation of the recording. E.g. there is a buffer memory that always record the sensors input up to a certain length of time or storage space, but when the buffer is full, the oldest information is automatically deleted. This enables the possibility to initiate a recording just after the experienced moment, and still have the possibility to recall and send that part of the experience.

The user 105 may end the recording by e.g. pushing a stop recording button or by stop talking. The vehicle system 400 may detect when the user 105 stops talking and interpret this as an end of the recording. Additionally or alternatively, the recording may end after a predetermined period of time and/or after a predetermined storage capacity limit has been reached.

### Step 205

The user 105 may get the option to send the recorded information from the audio recorder, video recorder and/or data recorder to at least one other system such as e.g. a customer service system, a user device, a social media system etc. The user device may be for example the user's 105 mobile phone, another user's mobile phone etc. The user 105 may initiate sending of the recorded information by pushing a button, by using a voice command, by using a gesture.

The vehicle system 400 may send the recorded information to another system with or without the user 105 having initiated the sending. In a scenario without user initiation, the vehicle system 400 may send the recorded information when the recording has ended, a time after the recording has ended, upon regular basis etc.

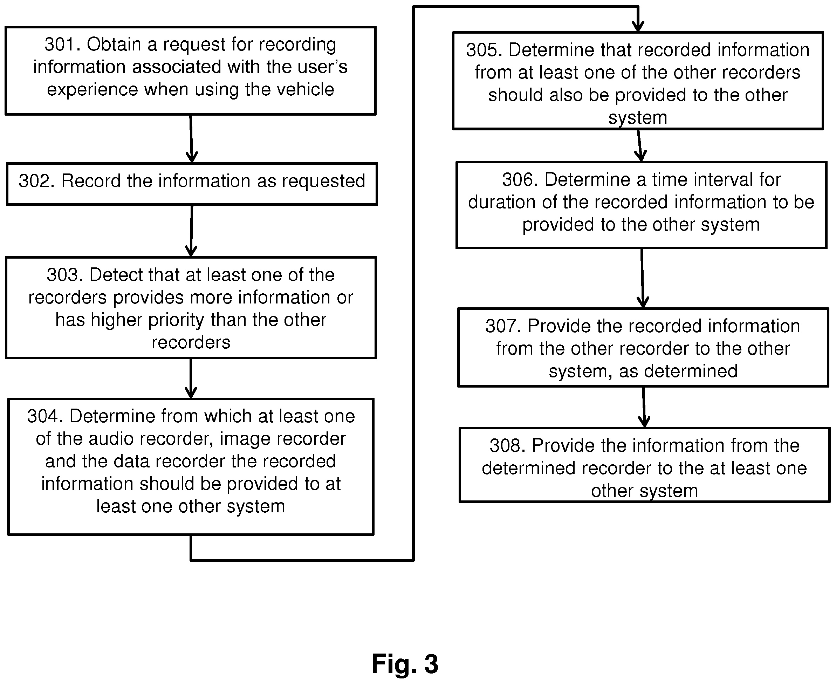

One example of a method performed by a vehicle system 400 for handling a user's 105 experience of using a vehicle 100 according to some embodiments will now be described with reference to the combined flowchart depicted in **fig. 3****.**

The user 105, e.g. the driver or the passenger, experiences something while using the vehicle 100 and wants assistance, to share information about the experience and to understand more about the experience, as described in step 200 for fig. 2.

The method illustrated in fig. 3 comprises at least one of the following steps, which steps may as well be carried out in another suitable order than described below:

### Step 301

This step corresponds to step 201 in fig. 2. The vehicle system 400 obtains a request for recording information associated with the user's 105 experience when using the vehicle. The recording may be requested by the user 105, by the vehicle system 400 comprised in the vehicle 100, by another vehicle system 400 or by another user. Requesting the recording may also be referred to as initiating or triggering the recording.

The user 105 of the vehicle 100 may initiate the recording by for example a voice command, by activating a button in the vehicle 100, by touching a button on a display in the vehicle 100 or on the user's mobile phone, by that the user performs a certain gesture, by sending a request via a mobile phone etc.

The vehicle system 400 may initiate the recording by automatically detecting that the user 105 experiences a vehicle behavior where recording of information is necessary or advantageous.

The request may have been obtained by means of an audio device, a requesting device, a gesture detecting device or a usage problem detector.

### Step 302

This step corresponds to steps 200, 202a, 202b, 202c and 203 in fig. 2. The vehicle system 400 records the information by means of at least one of an audio recorder, an image recorder and a data recorder, as requested. In example, information may be recorded by means of at least two of the audio recorder, image recorder and data recorder, or by means of all three recorders. Below is a list of some examples of from which of the recorders the information may be recorded:
- Audio recorder.
- Image recorder.
- Data recorder.
- Audio recorder and image recorder.
- Audio recorder and data recorder.
- Image recorder and data recorder.
- Audio recorder, image recorder and data recorder.

When the recording has been requested and started, information from the recording devices is stored in a memory. The memory may be an internal memory comprised in the vehicle 100, it may be an external memory in which the recording devices can store information, e.g. a memory in the cloud, and from which the vehicle system 400 may obtain information. The vehicle system 400 may obtain information from an external memory upon request or upon regular basis.

The information may be qualitative information, quantitative information or both. This will be described in more detail below.

A starting time of the recording is when the request has been obtained or a time amount after the request has been obtained.

An end time of the recording is a predetermined end time, a time when at least one of the recorders has detected that there is no more information to record, or a time when a user requested end of the recording has been obtained.

### Step 303

This step corresponds to step 240 in fig. 2. The vehicle system 400 may detect that at least one of the recorders provides more information or has higher priority than the other recorders.

### Step 304

This step corresponds to step 204 in fig. 2. The vehicle system 400 may determine from which at least one of the audio recorder, image recorder and the data recorder the recorded information should be provided to at least one other system.

The decision of from which recorders the recorded information that should be provided to the other system is taken based on instructions received from the user 105 or based on predetermined information.

### Step 305

This step corresponds to step 204 in fig. 2. The vehicle system 400 may determine that recorded information from at least one of the other recorders should also be provided to the other system.

The decision of that the recorded information from at least one of the other recorders should be provided to the other system may be taken based on instructions received from the user 105 or based on predetermined information.

### Step 306

This step corresponds to step 204 in fig. 2. The vehicle system 400 may determine a time interval for duration of the recorded information to be provided to the other system. The time interval may be the same or different for each of the recorders

The determined time interval may be equal to, shorter or greater than a recording time interval during which the information is recorded.

### Step 307

This step corresponds to step 205 in fig. 2. The vehicle system 400 may provide the recorded information from the other recorder to the other system, as determined

### Step 308

This step corresponds to step 205 in fig. 2. The vehicle system 400 provides the information from the determined recorder to the at least one other system.

The information provided to the at least one other system may be from the at least one recorder providing more information or having highest priority, as detected in step 303.

The other system may be associated with a vehicle customer support system, a user device or a social media system.

To perform the method steps shown in fig. 2 and 3 for handling a user's 105 experience of using a vehicle 100, the vehicle system 400 may comprise an arrangement as shown in **fig. 4****.**

The vehicle system 400 is adapted to, e.g. by means of an **obtaining module 401,** obtain a request for recording information associated with the user's 105 experience when using the vehicle 100. The request may have been obtained by means of an audio device, a requesting device, a gesture detecting device or a usage problem detector. The obtaining module 401 may also be referred to as an obtaining unit, an obtaining means, an obtaining circuit, means for obtaining etc. The obtaining module 401 may be a processor 402 of the vehicle system 400 or comprised in the processor 402 of the vehicle system 400. The obtaining module 401 may also be referred to as a receiving module.

The vehicle system 400 is adapted to, e.g. by means of a **recording module 403,** record the information by means of at least one of an audio recorder, an image recorder and a data recorder, as requested. A starting time of the recording may be when the request has been obtained or a time amount after the request has been obtained. An end time of the recording may be a predetermined end time, a time when at least one of the recorders has detected that there is no more information to record, or a time when a user requested end of the recording has been obtained. The recording module 403 may also be referred to as a recording unit, a recording means, a recording circuit, means for recording etc. The recording module 403 may be the processor 402 of the vehicle system 400 or comprised in the processor 402 of the vehicle system 400. The recording module 403 may comprise at least one of an audio recorder, image recorder, data recorder, or associated to at least on one of the recorders.

The vehicle system 400 is adapted to, e.g. by means of a **determining module 405,** determine from which at least one of the audio recorder, image recorder and the data recorder the recorded information should be provided to at least one other system. The decision of from which of the recorders the recorded information that should be provided to the other system may be taken based on instructions received from the user 105 or based on predetermined information. The determining module 405 may also be referred to as a determining unit, a determining means, a determining circuit, means for determining etc. The determining module 405 may be the processor 402 of the vehicle system 400 or comprised in the processor 402 of the vehicle system 400.

The vehicle system 400 is adapted to, e.g. by means of a **providing module 408,** provide the information from the determined recorder to the at least one other system. The providing module 408 may also be referred to as a providing unit, a providing means, a providing circuit, means for providing etc. The providing module 408 may be the processor 402 of the vehicle system 400 or comprised in the processor 402 of the vehicle system 400. The providing module 408 may also be referred to as a sending module or transmitting module.

The vehicle system 400 may be further adapted to, e.g. by means of a **detecting module 410,** detect that at least one of the recorders provides more information or has higher priority than the other recorders. The information provided to the at least one other system may be from the at least one recorder providing more information or having highest priority.

The vehicle system 400 may be further adapted to, e.g. by means of the determining module 405, determine that recorded information from at least one of the other recorders should also be provided to the other system. The decision of that the recorded information from at least one of the other recorders should be provided to the other system may be taken based on instructions received from the user 105 or based on predetermined information. The detecting module 410 may also be referred to as a detecting unit, a detecting means, a detecting circuit, means for detecting etc. The detecting module 410 may be the processor 402 of the vehicle system 400 or comprised in the processor 402 of the vehicle system 400.

The vehicle system 400 may be further adapted to, e.g. by means of the providing module 408, provide the recorded information from the other recorder to the other system, as determined. The other system may be associated with a vehicle customer support system, a user device or a social media system.

The vehicle system 400 may be further adapted to, e.g. by means of the determining module 405 determine a time interval for duration of the recorded information to be provided to the other system. The time interval may be the same or different for each of the recorders the determined time interval is equal to, shorter or greater than a recording time interval during which the information is recorded.

The vehicle system 400 may comprise the processor 402 and a **memory 413.** The memory 410 comprises instructions executable by the processor 402. The memory 413 may comprise one or more memory units. The memory 413 is arranged to be used to store recorded information, data, priority information, threshold values, time periods, configurations, schedulings, and applications to perform the methods herein when being executed in the vehicle system 400.

A computer program may comprise instructions which, when executed on at least one processor, cause the at least one processor to carry out at least some of the method steps 200-205 in fig. 2 and steps 301-308 in fig. 3. A carrier may comprise the computer program, and the carrier is one of an electronic signal, optical signal, radio signal or computer readable storage medium.

A vehicle may comprise the vehicle system 400 described above.

The present mechanism for handling a user's 105 experience of using a vehicle 100 may be implemented through one or more processors, such as a processor in the vehicle system 400 arrangement depicted in fig. 4 together with computer program code for performing the functions of the embodiments herein. The processor may be for example a Digital Signal Processor (DSP), Application Specific Integrated Circuit (ASIC) processor, Field-programmable gate array (FPGA) processor or micro processor. The program code mentioned above may also be provided as a computer program product, for instance in the form of a data carrier carrying computer program code for performing the embodiments herein when being loaded into the vehicle system 400. One such carrier may be in the form of a CD ROM disc. It is however feasible with other data carriers such as a memory stick. The computer program code can furthermore be provided as pure program code on a server and downloaded to the vehicle system 400.

Through the vehicle's interface, the user 105 is provided with a direct access button or speech system where he can initiate a log of data combined with audio and/or video feedback from the vehicle's audio recorders and image recorders that could be directly provided to other systems. The embodiments herein provide instant feedback of the user's experience in detail, both qualitative and quantitative, to other systems.

The embodiments herein provides a flexible and dynamic user choice of interacting with the vehicle 100, and also provides sending qualitative information, i.e. the user's experience, from the user 105 in the shape of sound and image together with quantities data from the vehicle 100. With this, the user 105 can be directly involved in the product development and the vehicle manufacturer gets closer to it's customer's experiences. This is a complement to the large amount of data which is logged from the vehicle 100.

The embodiments herein provide, with initiating by voice, button or gesture, a general and simple way of sharing a user's experience from the vehicle. Such experience can be directly shared in the form of a combination of audio, video and data. In addition, the embodiments herein provide a possibility to share information registered by the vehicle's sensors audio, visually, other data, some time before the user initiates the recording. The user 105 can later choose to provide the data to another system or to share the information with others e.g. on a social media system.

The embodiments herein are not limited to the above described embodiments. Various alternatives, modifications and equivalents may be used. Therefore, the above embodiments should not be taken as limiting the scope of the embodiments, which is defined by the appended claims. A feature from one embodiment may be combined with one or more features of any other embodiment.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

The term "configured to" used herein may also be referred to as "arranged to", "adapted to", "capable of" or "operative to".

It should also be emphasised that the steps of the methods defined in the appended claims may, without departing from the embodiments herein, be performed in another order than the order in which they appear in the claims.

## Claims

1. A method performed by a vehicle system (400) for handling a user's (105) experience of using a vehicle (100), the method comprising:
*obtaining* (201, 301) a request for recording information associated with the user's (105) experience when using the vehicle (100);
*recording* (200, 202a, 202b, 202c, 203, 302) the information by means of at least one of an audio recorder, an image recorder and a data recorder, as requested;
*determining* (204, 304) from which at least one of the audio recorder, image recorder and the data recorder the recorded information should be provided to at least one other system; and
*providing* (205, 308) the information from the determined recorder to the at least one other system.

2. The method according to claim 1, further comprising:
*detecting* (204, 303) that at least one of the recorders provides more information or has higher priority than the other recorders, wherein the information provided to the at least one other system is from the at least one recorder providing more information or having highest priority;
*determining* (204, 305) that recorded information from at least one of the other recorders should also be provided to the other system; and
*providing* (205, 307) the recorded information from the other recorder to the other system, as determined.

3. The method according to claim 2, wherein the decision of that the recorded information from at least one of the other recorders should be provided to the other system is taken based on instructions received from the user (105) or based on predetermined information.

4. The method according to any of the preceding claims, wherein the decision of from which of the recorders the recorded information that should be provided to the other system is taken based on instructions received from the user (105) or based on predetermined information.

5. The method according to any of the preceding claims, wherein a starting time of the recording is when the request has been obtained or a time amount after the request has been obtained.

6. The method according to any of the preceding claims, wherein an end time of the recording is a predetermined end time, a time when at least one of the recorders has detected that there is no more information to record, or a time when a user requested end of the recording has been obtained.

7. The method according to any one of the preceding claims, further comprising:
*determining* (204, 306) a time interval for duration of the recorded information to be provided to the other system,
wherein the time interval is the same or different for each of the recorders.

8. The method according to claim 7, wherein the determined time interval is equal to, shorter or larger than a recording time interval during which the information is recorded.

9. The method according to any of the preceding claims, wherein the request has been obtained by means of an audio device, a requesting device, a gesture detecting device or a usage problem detector.

10. The method according to any of the preceding claims, wherein the other system is associated with a vehicle customer support system, a user device or a social media system.

11. A vehicle system (400) adapted to:
obtain a request for recording information associated with the user's (105) experience when using the vehicle (100);
record the information by means of at least one of an audio recorder, an image recorder and a data recorder, as requested;
determine from which at least one of the audio recorder, image recorder and the data recorder the recorded information should be provided to at least one other system; and to
provide the information from the determined recorder to the at least one other system.

12. A vehicle comprising the vehicle system (400) according to claim 11.

13. A computer program comprising instructions which, when executed on at least one processor, cause the at least one processor to carry out the method according to any one of claims 1-10

14. A carrier comprising the computer program of claim 13, wherein the carrier is one of an electronic signal, optical signal, radio signal or computer readable storage medium.
